# EUROPEAN PATENT SPECIFICATION

(11) **EP 3 022 992 B1**
(45) Date of publication and mention of the grant of the patent: **17.05.2017**
(21) Application number: 14748308.5
(22) Date of filing: 16.07.2014
(51) Int. Cl.: H05B 37/02

(54) **LUMINAIRE SYSTEM HAVING TOUCH INPUT UNIT FOR CONTROL OF LIGHT OUTPUT ANGLE**
BELEUCHTUNGSSYSTEM MIT BERÜHRUNGSEINGABEEINHEIT ZUR STEUERUNG EINES LICHTAUSGABEWINKELS
SYSTÈME DE LUMINAIRE POSSÉDANT UNE UNITÉ D'ENTRÉE TACTILE POUR LA COMMANDE D'UN ANGLE DE SORTIE DE LUMIÈRE

(30) Priority: 17.07.2013 NL 2011182
(43) Date of publication of application: 25.05.2016
(73) Proprietor: Philips Lighting Holding B.V., 5656 AE Eindhoven (NL)
(72) Inventor: ROSS, Philip Roland, NL-5612 CG Eindhoven (NL); DE LEUR, Kamiel Robin, NL-3514 TV Utrecht (NL)
(74) Representative: van Eeuwijk, Alexander Henricus Waltherus
(86) International application number: PCT/NL2014/050484
(87) International publication number: WO 2015/009148

(56) References cited:
- US-A- 5 687 307
- US-A1- 2011 181 207

## Description

The invention relates to a luminaire system comprising
- at least one illumination unit comprising at least one light emitting element arranged to emit light out of at least one light emission surface;
- at least one input unit arranged for detecting a finger gesture of a user, and
- at least one driver unit arranged for driving the at least one illumination unit in accordance with the finger gesture detected by the at least one input unit.

The invention also relates to an input unit for such a luminaire system.

Luminaire systems are used for both indoor and outdoor lighting. Luminaire systems however are also used for specific purposes such as in automotive, operating rooms, or work desks for precision work and the like.

Known luminaire systems according to the preamble of the present invention comprise a illumination unit often provided with one or more light emitting element, for example a (halogen) incandescent lamp or (fluorescent) gas-discharge lamps. Electroluminescent lamps such as Light Emitting Diode, LED, module or modules are becoming more and more of interest, making luminaire systems more energy efficient and configurable. Not only LED modules but also other light sources such as gas-discharge lamps are driven by so called driver units which provide the light source with an electric signal specifically adapted for that particular light source.

Control of the light source, and hence, the luminaire, is most often provided via a standard input unit with only a simple on/off switch for enabling or disabling the driver unit. More state of the art input units are arranged to provide more control, for example by giving the user the ability to dim the intensity of the light source. Even luminaires having plural light emitting elements are known wherein the position of the light exiting the housing of the luminaire can be adapted by touching the input unit at a particular position. Such a luminaire is for example disclosed in WO 2009/148300 in the name of the same applicant as the present invention.

The input unit disclosed therein is arranged for driving the light source to output light at a position of a light emission surface that corresponds to the position of a finger of a user touching the input unit. Accordingly, a to be illuminated target area, for example a particular position near the lamp, an object or a particular surface can be illuminated by the luminaire without having to move the housing itself or manually adapting for example part of the housing to point it towards a certain direction. Although such a luminaire system is arranged for highly adaptable lighting it requires a relatively large and complex input unit to enable such flexible illumination.

It is an object of the present invention to provide a luminaire system wherein the luminaire is arranged for providing a light beam towards a target area which can be operated in a simple and intuitive manner.

According to the invention, a luminaire system for this purpose is characterized in that that the at least one input unit is further arranged for detecting an input angle between the finger and the at least one input unit and in that the at least one driver unit is further arranged for driving the at least one illumination unit for emitting light out of the at least one light emission surface under an output angle which corresponds with the detected input angle.

Prior art luminaires can, as indicated, comprise a plurality of LED elements as an example of a light emitting element, in order to provide a light beam wherein the direction of the light beam depends on the amount and position of the activated LED elements. The LED elements, when provided in a matrix can be arranged to differ in beam direction. For example, LED elements in the center of the matrix provide a light beam perpendicular to the light emission surface of the housing, and LED elements near the edge of the matrix provide a light beam with an offset with respect to the perpendicular axis.

Driving such an illumination unit is done by detecting the position of a finger or other way of input such as a hand held tool for example, on the input surface and driving one or more LED elements that correspond to that position. Since one can not determine from the input surface how the driver unit drives one or more LED elements the user is only able to determine the correct functioning of the luminaire on a trial-and-error base. Experimenting with touching the input surface at certain positions and looking at the beam being formed can provide the user information on how to control the luminaire's light production.

The luminaire according to an example of the present invention is arranged to detect a direction of a finger pointing towards the input surface by measuring certain characteristics of that finger with a proximity sensor(s). From these characteristics the input unit is able to determine the direction the finger is pointing in, and hence the angle between the finger and the input surface. By driving the illumination unit to emit light out of the light emitting surface of the housing in correspondence with the determined angle, the system is arranged to provide a simple and intuitive manner of controlling the direction, i.e. the angle, of the light beam for illuminating the object, surface or the like near the luminaire. Further, a luminaire according to an example of the present invention has the advantage of having a smaller input surface with respect to prior art input surfaces since the angle in stead of a position on the input surface is determined which also makes it quicker to operate.

Since the illumination unit is arranged for emitting light towards a certain direction and the input unit is able to determine an angle, a direct manner of control of the luminaire is herewith provided. The angle of the light exiting the luminaire corresponds with the angle at the input unit. This direct control method obviates the trail-and-error steps the user has to perform for precise and correct control. In view of the present invention, the input angle is considered the angle between the finger and the input surface of the input unit or a perpendicular axis thereof and indicated with the symbol α. The output angle is the angle at which the light beam exits the light emission surface of the housing and hence, the direction the light beam is pointing in with respect to the light emission surface or a perpendicular axis thereof, and in this application indicated with symbol β.

In a further embodiment the illumination unit, the driver unit and the input unit are fixedly mounted in the housing.

The luminaire system comprises several parts. First, a housing as a functional body of the illumination unit and the driver. Second, an input unit arranged for detecting the finger gesture and angle α. In a first most basic embodiment the input unit is together with the illumination unit and driver unit fully comprised in the housing of the luminaire in a non detachable manner. However, in a second more comprehensive embodiment the driver unit is detachable for remote controlling, wired or wireless, the luminaire at a certain distance. In yet another embodiment the input unit is a fully stand-alone unit arranged for wireless operating and controlling of the luminaire.

When the input unit is detachable from the housing it has the advantage of being able to control the luminaire from a distance for example from within a car in case of a automotive type luminaire system.

In yet another embodiment the input unit is arranged for measuring at least a first distance between a first position at said input unit and the finger and a second distance between a second position at said input unit and the finger and for determining the input angle from the determined first and second distances.

A functional implementation of the input unit could comprise a matrix of input sensors which are able to determine a distance between the sensor and the finger above the sensor. Such sensors are in the art known as proximity sensors, more particularly touch proximity sensors even though they are able to determine presence or distance of an object without physical contact. Even more particular these sensors are capacitive sensors.

When the sensors are arranged in a two dimensional matrix the circuitry driving the sensors are arranged to determine at least a first and second value from a first and second sensor. For example when the finger is pointing and touching or almost touching the input surface at a certain angle, two different distance values can be determined by a first and second sensor. The first sensor measures for example the capacitance between the sensor and the finger positioned above it, and the second sensor measures the capacitance between that sensor and a different part of the finger above that sensor. These values differ, and the more they differ the larger the angle between the input surface and the finger, or when using the perpendicular axis of the input surface, the smaller the angle.

Determining the angle from the difference in measured capacitances also works for other types of proximity sensors such as, radio based sensors (sonar or ultrasonic) infrared, laser, pressure, video, inductive touch sensors, etc. The skilled person will understand what kind of other proximity sensors are suitable. Certain sensors such as pressure sensors could also be used to determine pressure of the finger as a second parameter, for example to be used to control the intensity of the light beam, the width or color of the emitted beams. Accordingly, a combination of sensors can also be implemented. In another example the input unit could also be arranged for control of a plurality of light beams, exiting from a single luminaire or from a plurality of luminaires. In another example there may also be multiple sensing surfaces, i.e. input units, that jointly control one or more light beams, i.e. for gaming solutions, medical solutions when more people need to have control over the light settings, or solutions in big spaces being able to set the same light at different places and the like.

In another embodiment the input surface and the light emission surface are arranged at the same side of the housing or at opposite sides of the housing. In the embodiment wherein they are arranged at the same side, they can also overlap each other.

The housing can have different shapes, for different purposes and applications, for example. For a certain application or shape it could be more favorable to have the input surface and light emission surface arranged at the same side of the housing. Then the input angle α and output angle β are determined and controlled at the same side either in direct relationship, meaning that both angles are the same or in a mirroring relationship with respect to the perpendicular axis of both surfaces.

The input surface and the light emission surface can also be arranged at opposite sides of the housing of the luminaire. In that case the input angle α and output angle β are arranged at opposite sides of the housing. The input angle α and output angle β can in that case be the same, or, as with the previous embodiment, mirrored with respect to the perpendicular axis of both surfaces.

In yet another embodiment the input angle α and output angle β correspond with a certain ratio.

In the previously described embodiment the angle α and angle β can have a 1:1 relationship. However, for particular applications, for example wherein exact and precise control of the light beam direction is needed, a more precise control is favorable. In such a case, a ratio can be introduced between the angles. For example, when the angle α is 30 degrees angle β will be only 5 degrees, both with respect to the perpendicular axis of both surfaces, and when the angle α is 60 degrees, angle β will be only 10 degrees, respectively. This could also work the other way around, such that quick control of the light beam is provided wherein a relative small movement, i.e. the detected input angle, results in a relative large movement of the light beam, i.e. the output angle.

In further embodiment the input unit is arranged for driving the illumination unit for altering the output angle of the emitted light in correspondence with a measured alteration in the input angle.

Further to the previous embodiment, the luminaire can also be arranged for determining a relative change in input angle α to control the output angle β. Meaning, if the input device is touched (or at close proximity, for example less than a meter, more specific less than a few tens of centimeters, or even more specific less then a few centimeters) by a finger under an input angle α and subsequently the input angle α is altered by Δ α, the output angle β in altered by Δ β at a ratio of 1:1 or at a different unequal ratio. Further, the speed could also be used to alter the output angle β. For example, at a low speed of changing the input angle α, the output angle is only changed by Δ β at a ratio of 1:1 with respect to the input angle Δ α, but at a high speed of changing the input angle α, the output angle is changed by Δ β at a ratio of for example 2:1 with respect to the input angle Δ α. Accordingly increasing the speed of alteration of the input angle determines the amount of alteration of the output angle.

In another embodiment a multi-luminaire is presented implementing the same principle as disclosed in the fore-going embodiments. This embodiment of is particularly useful in situations, where large walls, surfaces or areas to be lighted, like long hallways, and where a single luminaire cannot cover (illuminate) enough of the surface. In such a case, multiple luminaires according to an example of the invention are needed. It may however be impractical for the user to adjust each luminaire of the system separately.

In such a case, a multi-luminaire is presented in a set-up in which the settings on one luminaire, denoted as a master device, are automatically copied on one or multiple other luminaires, i.e. the slave devices. In this embodiment one master luminaire and for example two different slave luminaires. More luminaires, i.e. slave devices can be implemented. The devices can be connected via data cables or via wireless (remote) communication means. Wireless or remote communication could be effectuated through antennas, that send and receive, for example, RF, Bluetooth, Zigbee or Wifi setting signals.

The light beam angle and other control parameters such as the intensity of a beam as controlled on luminaire are created and emitted on the device as normal. Each luminaire has a control switch on the back of the housing allowing the luminaire to be switched into a MASTER-mode or SLAVE-mode (or setting). In case the MASTER-setting is selected, the MASTER-device searches in its vicinity for detectable corresponding luminaire devices being set into the SLAVE-mode and connects to them.

The MASTER-device then sends setting signals (control commands) being created by the central processing unit of MASTER-device to the SLAVE-devices. The setting signal thus being generated and sent corresponds to the angle, intensity and other controls of the beam being controlled at the input surface of the MASTER-device. The SLAVE- devices decodes these setting signals in proper control commands for controlling the corresponding light emitting elements in a fashion identical to the beam created on the MASTER-device.

Upon receipt of the setting signals from the MASTER-device (either via a data cable interconnecting both MASTER and SLAVE device or via a wireless, remote communication link), one or more SLAVE-device creates a beam using its light emitting elements, creating the same visual effect as the beam on the MASTER-device.

A SLAVE-device can have an identical configuration of light emitting elements but not have an input unit, thus reducing costs. Such a device can also be proportionally scaled to a smaller size. In the case of such a smaller scaled embodiment, the setting signal (or control commands) from the input unit of the MASTER-device are translated to fit proportionally the amount and location of activated light emitting elements of the SLAVE-device. As a result, the SLAVE light beam, being a scaled version of MASTER light beam, is created with a proportional amount of activated light emitting elements.

In some cases, it is more convenient for the user to control the luminaire from a distance. In an embodiment separate remote control is disclosed that controls a luminaire. The remote control has similar control elements as the luminaires described in the previous embodiments, and these control elements function similarly. The remote control device has a housing having outer dimensions which conform the inner dimensions of a opening or slot provided in the housing of the corresponding luminaire. Herewith a proper mechanical clamping effect can be assured, when the control device is stored in the opening or slot of the housing, thus guaranteeing a proper mechanical connection between both parts. Although the dimensions (or shape) of both the control device and the slot form connecting means for guaranteeing a proper sustainable fit of both parts, both the control device and the opening or slot can be provided with additional (mechanical) connection means in the form of elastic or springy lips or small notches on one part, which fit in corresponding recesses present on the other part.

The remote control has wireless (remote) communication means which communicate with corresponding communication means present in the housing of the luminaire through suitable antennas (present on both the control device and the luminaire). The remote control device has an input unit for detecting an input angle of the user similar in terms of functionality as those described in connection to the previous embodiments.

Communication between a remote control device and a luminaire can be similar to communication between MASTER and SLAVE-devices described earlier. The input surface being the input unit of the remote control device could also be supplied with visual feedback. The remote control device could also be used with a dedicated SLAVE-device. The remote control device could also control multiple luminaire devices for example all the luminaire devices in its vicinity that are set in the SLAVE-mode via their control switch.

The remote control device can be a remote control device integrated in the housing, detachable from the housing, or even a separate stand-alone remote control device (for example a wall mounted remote control device) arranged for a luminaire system according to the invention. In the detachable or stand-alone embodiment the remote control is powered by batteries, when taken from the opening or slot and used as a remote control for controlling the luminaire by means of wireless communication. The luminaire has a connector that interconnects with a corresponding connector on the housing of the remote control device, when the control device is stored in the opening or slot. The interconnecting connectors (also part of the connecting means) of both the luminaire and the control device allow for at least an electrical connection. Although a proper mechanical connection is already assured due to the proper fitting of the control device, i.e. the input unit, in the opening or slot in the housing of the luminaire as described above, an optional mechanical interconnection of both parts can also be obtained with the use of the electrical connectors.

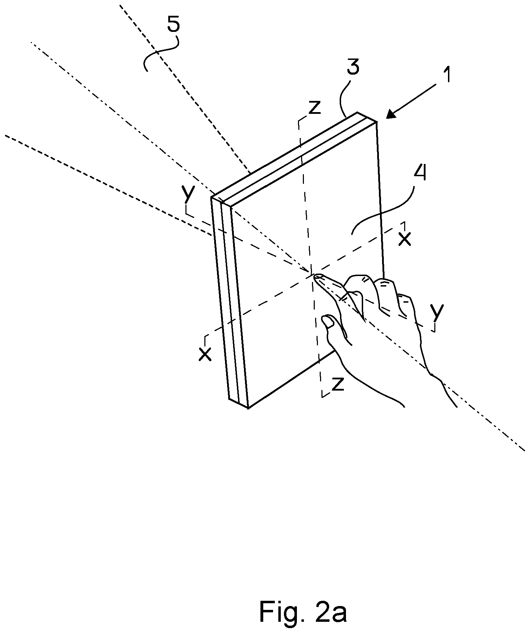

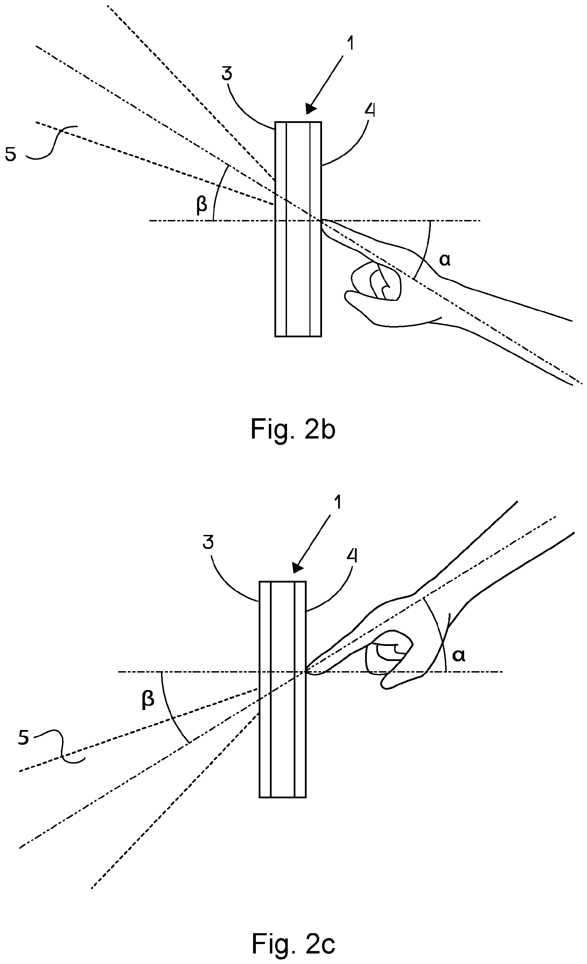

When this electrical connection is established, the remote (wireless) communication is terminated and replaced by a communication and control possibility through the connector. Once the control device is stored and connected in the housing of the luminaire the batteries can be charged and the luminaire can be controlled by the now stored control device in a manner similar as the luminaires disclosed in de description of the figures 2-10.

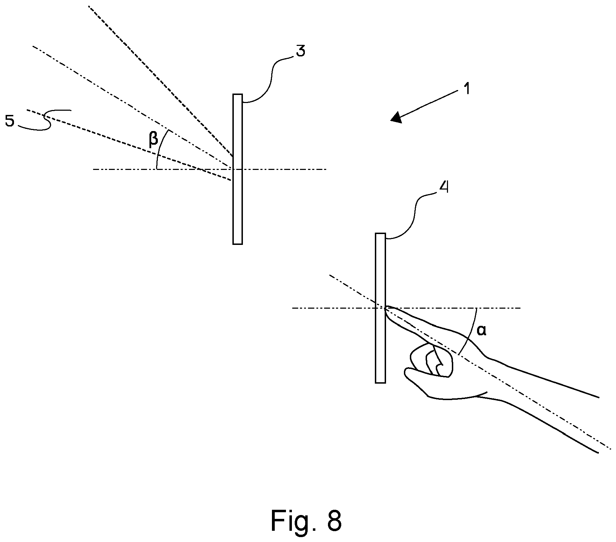

In another embodiment a remote control device is presented that is visualized as a software interface on another device, which could be a smartphone, tablet PC or laptop. The software interface and its functionality is similar to the physical embodiment of the control device, i.e. the input unit 4 of Figure 8, only projected on a screen, preferably a touch sensitive screen. The remote software uses the communication means in the device that to make the wireless connection to the luminaire for outputting a light beam 5 at the light emission surface 3 under an output angle in correspondence with the detected input angle at the input surface 4.

In particular said hand held device is arranged for detecting an input angle of the finger pointing or touching said input unit, e.g. by detecting a finger in the proximity of the touch screen of the hand held device. For example the hand held device could comprise a matrix of proximity sensors such as a matrix of capacitive sensors, i.e. a touch screen as known in the art of mobile devices such as smartphones and tables. In another example the device could also be arranged to detect the input angle of the finger pointing at the device by a camera unit or a stereo camera unit.

The hand held device also comprises signal generating means, which signal generating means are arranged in generating one or more setting signals for said plurality of light emitting elements of the corresponding luminaire (or luminaires) to be controlled in response to gesture touches of the user of said input unit on said touch sensitive screen. Said setting signals are send by communicating means to said luminaire(s), said emitted one or more settings signals - once received by the appropriated corresponding communication means of the luminaire(s) - being intended in controlling the angle of the light beam composition as well as additional properties such as the light intensity, color or the like.

In automotive applications, small versions of the luminaires according to the invention could be attached to or integrated in the ceiling or doors of a vehicle interior. The advantage for the users of the remote control device solutions in vehicles is that in some cases, reaching for the luminaire is uncomfortable or impossible or can even be dangerous when driving the vehicle.

The invention as disclosed in the embodiments described may be implemented in luminaries having any creative or desirable designs. Alternatively, the input surface of the input unit may be as small or as large as suitable and desirable. Light sources could be LEDs, but also OLEDs, colored incandescent bulbs, fluorescent tubes, halogen lights with color filters and more. In addition, the size of the luminaire can be changed depending upon the type of structure in which the device is likely to be installed. In automotive applications, such devices could be relatively small and be installed on the interior ceiling or doors of the vehicle, or could be integrated into the ceiling or door panels. Similarly, this invention may be suitably incorporated on walls of structures like cinemas, patient rooms in hospitals, theatres and hotels. The invention could also be used to control the light beam angle in medical lights. The invention could also be applied in luxury structures like yachts, airplanes or ocean liners.

In a second example an input unit is presented that is arranged for detecting an input angle between a finger and an input surface of the input unit for outputting a signal towards a driver unit of a luminaire according to any of the previously described embodiments.

The invention will now be explained in more detail with reference to a drawing in which the preferred embodiments of the luminaire according to examples of the invention are diagrammatically depicted. The invention, however, in:
Figure 1 shows an example of a luminaire housing which is arranged to comprise an embodiment of the invention;
Figure 2a, 2b and 2c, show diagrammatically embodiments in which the sensor surface is touch and controlled by a finger of a user;
Figure 3a and 3b show diagrammatically embodiments in which the sensor surface is on the inside and outside surface of the housing;
Figure 4a and 4b show diagrammatically embodiments with different cross sections of light emission units;
Figure 5 shows diagrammatically a build-up of the system according to an embodiment of the invention;
Figure 6a and 6b show diagrammatically a representation of the sensor element function according to an embodiment of the invention;
Figure 7a and 7b show diagrammatically embodiments of the invention with relative angle adjustment;
Figure 8 shows a diagrammatically embodiment of the invention with a remote controlled luminaire;
Figure 9a and 9b show diagrammatically embodiments of the invention wherein the light emission surface and sensor unit are located at the same side of the luminaire housing; and
Figure 10a and 10b show diagrammatically embodiments of the housing of the luminaire with different build-ups of the different elements.

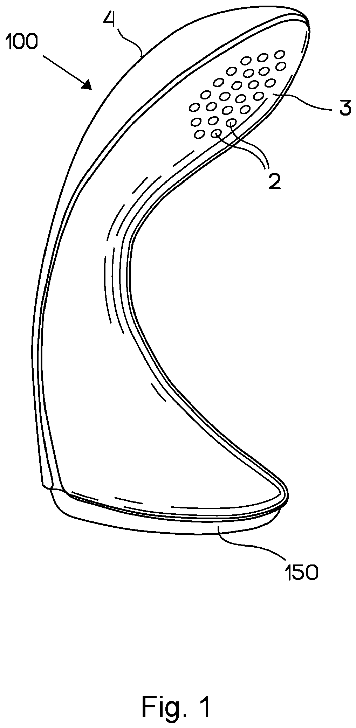

The luminaire 100 of figure 1 comprises a semitransparent synthetic resin housing with a foot 150 and light-emitting elements (inorganic Light Emitting Diodes, LEDs) 2 located near a light emission surface 3 of the housing. They are activated by a user touching (or near proximity) a group of sensors which are accommodated in the rear wall of the housing and which are arranged in a matrix over the slightly curved surface thereof, forming the input unit 4 of the luminaire system. The user controls the luminaire 100 for example by way of multi-touch, wherein the distance between two fingers touching the group of sensors corresponds to the width of the light beam originating from the led elements 2 and exiting the housing at a light emission surface 3 thereof. In this example the sensors are arranged in a group in a multidimensional manner, as are the LEDs. The sensors are capacitive proximity sensors able to determine the capacitance between the sensor and an object nearby, hence the capacitance is not only a measurement for determining whether or not an object is detected, more specific one can also determine the distance to the object on the basis of the measured capacitance.

In figure 2a, 2b, 2c it is diagrammatically shown how the user can touch the surface 4 of the input unit comprising the group of sensors 4a. The luminaire provides angular control of the light beam 5 emitted from a specific place wherein the angle at which the light is projected from the light emitting surface 3 corresponds to the angle at which the finger, i.e. the input, touches the sensitive surface.

The current invention as shown in figures 2a-2c permits the angular control of the light (beam) emitted form a specific place, wherein the angle at which the light is projected from the light emitting surface corresponds to the angle at which the finger (i.e., the input) touches the sensitive surface. The angle is determined by the angle between either the surface of the sensor unit, being axis X or Y, or the axis Z perpendicular thereto. See Figure 2a, 2b and 2c. A touch sensitive surface 4 is touched by a finger, multiple fingers or any other suitable tool such as a stylus or the like, under an angle α. A light emitting side 3 radiates a light beam 5 in the corresponding angle β. This angle β could for example be identical to angle α, the inverse of angle α, a multitude of α (c* α), or a exponential of α (α^n), or any other function of α (β=f(α)).

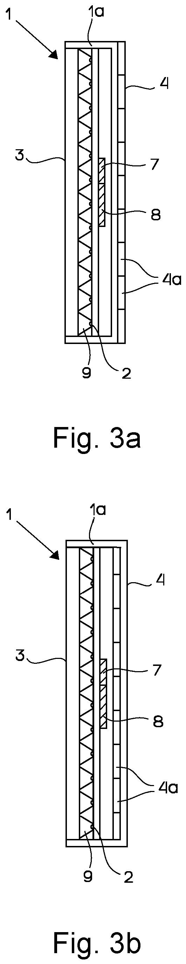

In figures 3a and 3b show possible build-ups in which the touch sensors, i.e. the sensor elements 4a are placed on the inside of the casing, i.e. the housing 1a. A Central Processing Unit 7 reads out the sensors and calculates or determines an angle, which is characteristic (or corresponds to) of the attitude of the finger. It then sends control signals to the LEDs, e.g. to the driver of the LEDs, to create the light beam 5 at the desired angle.

The LEDs with optics and driving electronics 8 make sure the light is projected in the desired angles. The LEDs are either oriented in different angles, or the optics on the LEDs steer the light in the desired angle through refraction. In both cases, a light beam with the desired angle is created through switching on the specific LED with optics that corresponds to that angle. A transparent wall part 3 closes the housing 1a, while allowing the light from the LEDs to exit the luminaire.

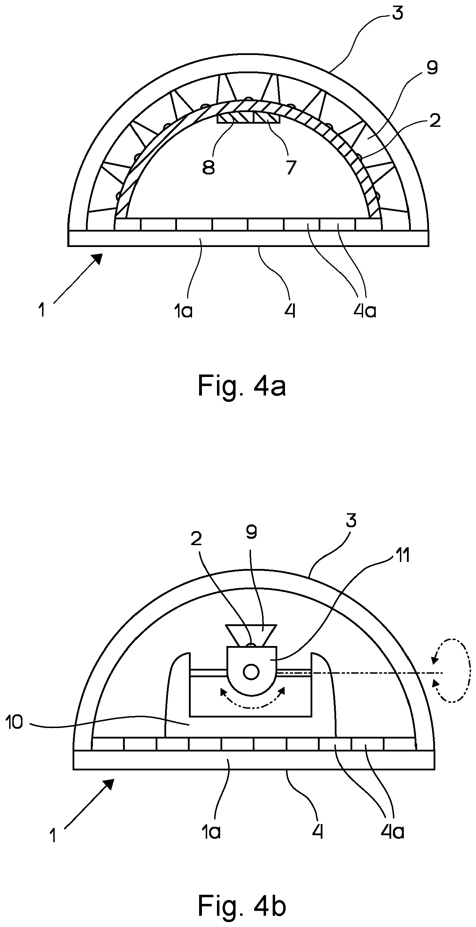

An alternative build-up for the device is given in figure 4a, wherein the LEDs with optics 9 are arranged in a dome-like manner. A beam with desired angle is created through switching on the LED that is positioned in the corresponding angle. The advantage is that the footprint of this arrangement can be smaller than a 'flat' arrangement of LEDs. Another alternative build-up is shown in Figure 4b that shows a mechanically actuated way of steering the beam, using a LED with optics 9 positioned on a contraption that rotates around two axes. Two motors 10,11 actuate rotation around both axes such that the light beam 5 projected out of the luminaire corresponds to the input angle determined by the sensor unit.

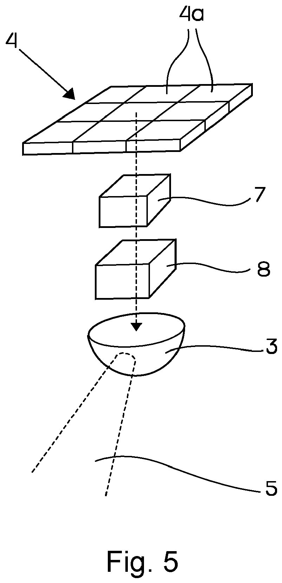

Figure 5 shows the schematic technical build-up of the system. The touch surface is equipped with a matrix of touch sensors, for example capacitive sensors 4a. The data is read by a CPU 7. This CPU sends command signals to the light emitting element(s) 2 via the driver unit 8 which arranges correct driving of the one or plural light emitting elements.

Using a finger, tool, stylus or the like, the user can touch an area of the wall surface comprising the sensors 4a. Next the CPU 7 calculates or determines an angle that is characteristic of (or corresponds to) the attitude of the finger, or the detector has to determine the angle of inclination about an axis or reference point at which the finger touches the surface. This angle determination could be done using a matrix of proximity sensors, like for example capacitive sensors, that read distances of parts of the hand around the touch location. Patterns in the sensor data can indicate angle of the touching finger.

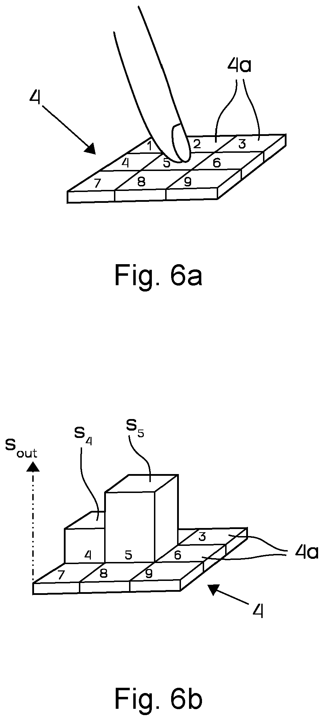

For a more detailed representation of the determined values Sₒᵤₜ see figure 6a and 6b. Figure 6a shows a matrix of nine capacitive sensor elements being touch by a finger. Figure 6b shows a visual depiction of the signal strengths Sₒᵤₜ of the different sensor elements. In this case, sensor 5 in the middle has the highest output S₅, since most of the finger is near that sensor. The adjacent sensor element number four, has the second highest output S₄, since the tilted finger is also close to the area above that sensor element. The other sensor elements have no significant output. The finger angle, being angle α, can be derived from the spatial relation between the sensors and their output S₄, S₅.

Using the information from the detector regarding the determination of the angle α of attitude of the finger, the information is communicated to the sensor elements so that the light source(s), i.e. the light emission elements, 2 is/are activated to project a beam of light 5 from the light emission side 3 of the device 1 at an angle of inclination corresponding to the angle which is characteristic of the attitude of the user's finger, or projects light with an incidence which is a function of the attitude of the finger.

In this way, the finger can be moved at an angle to the wall surface and the resulting activated light beam 5 projected from the emission surface 3 can move concurrently with the motion of the finger. When not in use, the attitude/angular mode can be switched off or deactivated until the next time the user wishes to use this particular mode.

In an embodiment the luminaire according to the invention can be instructed that it is to be operated in this particular mode so as to be able to control the attitude or angle at which the light is emitted from the light emission surface after activation of the light source(s). This can be an instruction to the luminaire device to activate the device in, let's say, angular mode or so.

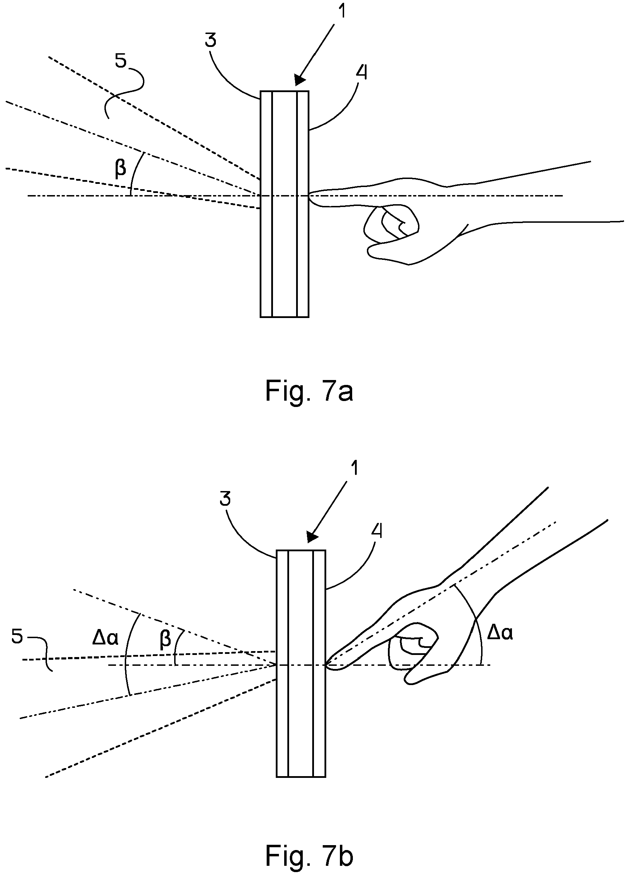

The attitude gesture could also function in a relative, alternation, manner, where the change of the angle made by the finger corresponds to the change in the angle of the light beam. Figure 7a shows such function. In Figure 7a the beam has an angle α. The finger is inserted at a random starting angle, in the case of the figure, perpendicular to the sensing surface. In figure 7b, the finger rotates with an angle β. The light beam rotates with the finger with the same angular displacement β. The resulting light beam angle is the sum of its original angle α and the rotation angle β.

The control surface could also be separated from the light emitting surface, so that it becomes a remote pad with the pointing functionality, see figure 8. The orientation of the remote pad, being a remote input unit, may need to be aligned with the luminaire, to prevent compromising the ease of use. This remote pad could also be a smartphone or tablet PC.

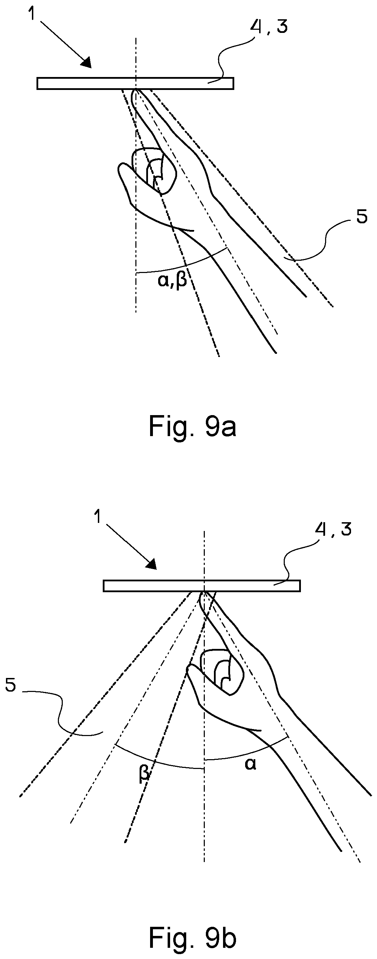

The attitude gesture could also be used on the light emitting side, provided that the light emitting side is equipped with the necessary sensing, i.e. input system. In figure 9a, the light emitting surface is joint with the touch sensitive surface wherein the angle the finger makes with the surface (α) determines the angle of the light beam (β). In Figure 9b a similar situation is depicted, but the light beam angle is mirrored in relation to the normal plane of the surface. This mirroring prevents the blocking of the light beam with the finger.

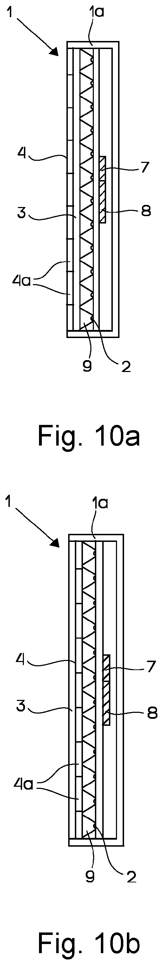

Figure 10a shows a possible build-up to implement the sensing on the light emitting side. Transparent or very small sensors 4a are located on the outer side of a transparent wall part of the device 1. Together they form the combined sensing and light emitting wall part 3,4 from Figure 9a and 9b. The CPU 7 reads out the sensors 4a and calculates or determines an angle, which is characteristic (or corresponds to) of the attitude of the finger. It then determines the desired angle of the light beam. It then sends control signals to the LEDs.

The LEDs with optics and driving electronics 8 make sure the light is projected in the desired angles. The LEDs are either oriented in different angles, or the optics on the LEDs steer the light in the desired angle through refraction. In both cases, a light beam 5 with the desired angle is created through switching on the specific LED with optics that corresponds to that angle.

Figure 10b shows a similar build-up, with the difference that the sensors 4a are placed on the inside of the transparent wall 3.

Modifications and additions to the device disclosed above are obvious to those skilled in the art and covered by the scope of the appended claims.

## Claims

1. Luminaire system comprising
- at least one illumination unit (100) comprising at least one light emitting element (2) arranged to emit light out of at least one light emission surface (3);
- at least one input unit (4) arranged for detecting a finger gesture of a user, and
- at least one driver unit arranged for driving said at least one illumination unit in accordance with said finger gesture detected by said at least one input unit, **characterized in that** said at least one input unit is further arranged for detecting an input angle (∝) between said finger and said at least one input unit and **in that** said at least one driver unit is further arranged for driving said at least one illumination unit for emitting light out of said at least one light emission surface under an output angle (β) which corresponds with said detected input angle.

2. Luminaire system according to claim 1, wherein said luminaire system comprises a housing containing said at least one illumination unit, said at least one driver unit and said at least one input unit.

3. Luminaire system according to claim 2, wherein said at least one input unit is detachably mounted in said housing.

4. Luminaire system according to claim 3, wherein said at least one detachably input unit is arranged for wireless communication with said at least one driver unit.

5. Luminaire system according to any of the previous claims, wherein said at least one input unit is arranged for measuring at least a first distance between a first position at said at least one input unit and the finger and a second distance between a second position at said at least one input unit and the finger and for determining said input angle from said determined first and second distances.

6. Luminaire system according to claim 5, wherein said at least one input unit comprises a plurality of sensor elements arranged in a matrix for measuring said first and second distance by a first and second sensor element of said matrix.

7. Luminaire system according to claim 5 or 6, wherein said sensor elements are touch proximity sensor elements, and in particular capacitive sensor elements.

8. Luminaire system according to any of the claim 2-7, wherein said at least one input surface and said at least one light emission surface are arranged at opposite sides of said housing.

9. Luminaire system according to any of the claim 2-7, wherein said at least one input surface and said at least one light emission surface are arranged at a same side of said housing.

10. Luminaire system according to claim 9, wherein said at least one input surface and said at least one light emission surface overlap.

11. Luminaire system according to any of the previous claims, wherein said output angle corresponds to a ratio of said input angle.

12. Luminaire system according to any of the previous claims, wherein said at least one input unit is arranged for driving said at least one illumination unit for altering said output angle of said emitted light in correspondence with a measured alteration in said input angle.

13. Luminaire system according to claim 12, wherein said output angle is altered in correspondence with a ratio of said measured alteration of said input angle and wherein said ratio is determined by a speed of alteration of said input angle.

14. Luminaire system according to any of the previous claims, wherein said luminaire system comprises a plurality of housings, and wherein a driving unit is arranged for driving illumination units of a plurality of corresponding housings, or wherein a plurality of driving units are arranged for driving an illumination unit of a housing of said plurality of housings, or wherein a plurality of driving units are arranged for driving illumination units of a plurality of corresponding housings.

15. An input unit, arranged for detecting an input angle between a finger and an input surface of said at least one input unit for outputting a signal towards at least one driver unit of at least one luminaire according to any of the previous claims.

## Patentansprüche

1. Beleuchtungssystem, Folgendes umfassend
- zumindest eine Leuchteinheit (100), zumindest ein lichtemittierendes Element (2) umfassend, das angeordnet ist, um Licht aus zumindest einer Lichtemissionsfläche (3) zu emittieren;
- zumindest eine Eingabeeinheit (4), die angeordnet ist, um eine Fingerbewegung eines Benutzers erfassen, und
- zumindest eine Treibereinheit, die angeordnet ist, um die besagte zumindest eine Leuchteinheit entsprechend der besagten Fingerbewegung anzutreiben, die durch die besagte zumindest eine Eingabeeinheit erfasst wurde,
**dadurch gekennzeichnet, dass** die besagte zumindest eine Eingabeeinheit darüber hinaus angeordnet ist, um einen Eingabewinkel (α) zwischen dem besagten Finger und der besagten zumindest einen Eingabeeinheit zu erfassen, und dadurch, dass die besagte zumindest eine Treibereinheit darüber hinaus angeordnet ist, um die besagte zumindest eine Leuchteinheit anzutreiben, um Licht aus der besagten zumindest einen Lichtemissionsfläche unter einem Ausgabewinkel (β) zu emittieren, der dem besagten erfassten Eingabewinkel entspricht.

2. Beleuchtungssystem nach Anspruch 1, wobei das besagte Beleuchtungssystem ein Gehäuse umfasst, das die besagte zumindest eine Leuchteinheit, die besagte zumindest eine Treibereinheit und die besagte zumindest eine Eingabeeinheit enthält.

3. Beleuchtungssystem nach Anspruch 2, wobei die besagte zumindest eine Eingabeeinheit abnehmbar im besagten Gehäuse montiert ist.

4. Beleuchtungssystem nach Anspruch 3, wobei die besagte zumindest eine abnehmbare Eingabeeinheit für eine drahtlose Kommunikation mit der besagten zumindest einen Treibereinheit angeordnet ist.

5. Beleuchtungssystem nach irgendeinem der vorhergehenden Ansprüche, wobei die besagte zumindest eine Eingabeeinheit angeordnet ist, um zumindest einen ersten Abstand zwischen einer ersten Position an der besagten zumindest einen Eingabeeinheit und dem Finger und einem zweiten Abstand zwischen einer zweiten Position an der besagten zumindest einen Eingabeeinheit und dem Finger zu messen, und um den besagten Eingabewinkel aus den besagten bestimmten ersten und zweiten Abständen zu bestimmen.

6. Beleuchtungssystem nach Anspruch 5, wobei die besagte zumindest eine Eingabeeinheit eine Vielzahl von Sensorelementen umfasst, die in einer Matrix zum Messen des besagten ersten und zweiten Abstands durch ein erstes und zweites Sensorelement der besagten Matrix angeordnet sind.

7. Beleuchtungssystem nach Anspruch 5 oder 6, wobei die besagten Sensorelemente berührungsempfindliche Näherungssensorelemente, und im Speziellen kapazitive Sensorelemente sind.

8. Beleuchtungssystem nach irgendeinem der Ansprüche 2 bis 7, wobei die zumindest eine Eingabefläche und die besagte zumindest eine Lichtemissionsfläche an gegenüberliegenden Seiten des besagten Gehäuses angeordnet sind.

9. Beleuchtungssystem nach irgendeinem der Ansprüche 2 bis 7, wobei die zumindest eine Eingabefläche und die besagte zumindest eine Lichtemissionsfläche an einer selben Seite des besagten Gehäuses angeordnet sind.

10. Beleuchtungssystem nach Anspruch 9, wobei sich die besagte zumindest eine Eingabefläche und die zumindest eine Lichtemissionsfläche überschneiden.

11. Beleuchtungssystem nach irgendeinem der vorhergehenden Ansprüche, wobei der besagte Ausgabewinkel einem Verhältnis des besagten Eingabewinkels entspricht.

12. Beleuchtungssystem nach irgendeinem der vorhergehenden Ansprüche, wobei die besagte zumindest eine Eingabeeinheit angeordnet ist, um die besagte zumindest eine Leuchteinheit anzutreiben, um den besagten Ausgabewinkel des besagten emittierten Lichts entsprechend einer gemessenen Veränderung im besagten Eingabewinkel zu verändern.

13. Beleuchtungssystem nach Anspruch 12, wobei der besagte Ausgabewinkel entsprechend einem Verhältnis der besagten gemessenen Veränderung des besagten Eingabewinkels verändert wird, und wobei das besagte Verhältnis durch eine Geschwindigkeit der Veränderung des besagten Eingabewinkels bestimmt wird.

14. Beleuchtungssystem nach irgendeinem der vorhergehenden Ansprüche, wobei das besagte Beleuchtungssystem eine Vielzahl von Gehäusen umfasst, und wobei eine Treibeinheit angeordnet ist, um die Leuchteinheiten einer Vielzahl von entsprechenden Gehäusen anzutreiben, oder wobei eine Vielzahl von Treibeinheiten angeordnet sind, um eine Leuchteinheit eines Gehäuses der besagten Vielzahl von Gehäusen anzutreiben, oder wobei eine Vielzahl von Treibeinheiten angeordnet sind, um Leuchteinheiten einer Vielzahl von entsprechenden Gehäusen anzutreiben.

15. Eingabeeinheit, die angeordnet ist, um einen Eingabewinkel zwischen einem Finger und einer Eingabefläche der besagten zumindest einen Eingabeeinheit zu erfassen, um ein Signal in Richtung zumindest einer Treibereinheit von zumindest einer Beleuchtung nach irgendeinem der vorhergehenden Ansprüche auszugeben.

## Revendications

1. Système luminaire, comprenant :
- au moins une unité d'éclairage (100) comprenant au moins un élément émetteur de lumière (2) agencé pour émettre de la lumière hors d'au moins une surface à émission de lumière (3) ;
- au moins une unité d'entrée (4) agencée pour détecter un geste de doigt d'un utilisateur, et
- au moins une unité d'excitation agencée pour exciter ladite au moins une unité d'éclairage conformément audit geste de doigt détecté par ladite au moins une unité d'entrée,
**caractérisé en ce que** ladite au moins une unité d'entrée est en outre agencée pour détecter un angle d'entrée (α) entre ledit doigt et ladite au moins une unité d'entrée et **en ce que** ladite au moins une unité d'excitation est en outre agencée pour exciter ladite au moins une unité d'éclairage pour émettre de la lumière hors de ladite au moins une surface à émission de lumière selon un angle de sortie (β) qui correspond audit angle d'entrée détecté.

2. Système luminaire selon la revendication 1, dans lequel ledit système luminaire comprend un logement contenant ladite au moins une unité d'éclairage, ladite au moins une unité d'excitation et ladite au moins une unité d'entrée.

3. Système luminaire selon la revendication 2, dans lequel ladite au moins une unité d'entrée est montée de façon séparable dans ledit logement.

4. Système luminaire selon la revendication 3, dans lequel ladite au moins une unité d'entrée séparable est agencée pour communication sans fil avec ladite au moins une unité d'excitation.

5. Système luminaire selon l'une quelconque des revendications précédentes, dans lequel ladite au moins une unité d'entrée est agencée pour mesurer au moins une première distance entre une première position, à ladite au moins une unité d'entrée, et le doigt et une seconde distance entre une seconde position, à ladite au moins une unité d'entrée, et le doigt et pour déterminer ledit angle d'entrée à partir desdites première et second distances déterminées.

6. Système luminaire selon la revendication 5, dans lequel ladite au moins une unité d'entrée comprend une pluralité d'éléments capteurs agencés en une matrice pour mesurer lesdites première et seconde distance par l'intermédiaire de premier et second éléments capteurs de ladite matrice.

7. Système luminaire selon la revendication 5 ou 6, dans lequel lesdits éléments capteurs sont des éléments capteurs de proximité de toucher, et en particulier des éléments capteurs capacitifs.

8. Système luminaire selon l'une quelconque des revendications 2 à 7, dans lequel ladite au moins une surface d'entrée et ladite au moins une surface à émission de lumière sont agencées sur des côtés opposés dudit logement.

9. Système luminaire selon l'une quelconque des revendications 2 à 7, dans lequel ladite au moins une surface d'entrée et ladite au moins une surface à émission de lumière sont agencées sur un même côté dudit logement.

10. Système luminaire selon la revendication 9, dans lequel ladite au moins une surface d'entrée et ladite au moins une surface à émission de lumière se chevauchent.

11. Système luminaire selon l'une quelconque des revendications précédentes, dans lequel ledit angle de sortie correspond à un rapport dudit angle d'entrée.

12. Système luminaire selon l'une quelconque des revendications précédentes, dans lequel ladite au moins une unité d'entrée est agencée pour exciter ladite au moins une unité d'éclairage pour altérer ledit angle de sortie de ladite lumière émise en correspondance avec une altération mesurée dudit angle d'entrée.

13. Système luminaire selon la revendication 12, dans lequel ledit angle de sortie est altéré en correspondance avec un rapport de ladite altération mesurée dudit angle d'entrée et dans lequel ledit rapport est déterminé par une vitesse d'altération dudit angle d'entrée.

14. Système luminaire selon l'une quelconque des revendications précédentes, dans lequel ledit système luminaire comprend une pluralité de logements, et dans lequel une unité d'excitation est agencée pour exciter des unités d'éclairage d'une pluralité de logements correspondants, ou dans lequel une pluralité d'unités d'excitation sont agencées pour exciter une unité d'éclairage d'un logement de ladite pluralité de logements, ou dans lequel une pluralité d'unités d'excitation sont agencées pour exciter des unités d'éclairage d'une pluralité de logements correspondants.

15. Unité d'entrée, agencée pour détecter un angle d'entrée entre un doigt et une surface d'entrée de ladite au moins une unité d'entrée pour produire en sortie un signal vers au moins une unité d'excitation d'au moins un luminaire selon l'une quelconque des revendications précédentes.
